# EUROPEAN PATENT APPLICATION

(11) **EP 3 943 454 A1**
(43) Date of publication of application: **26.01.2022**
(21) Application number: 21155302.9
(22) Date of filing: 04.02.2021
(51) Int. Cl.: C02F 1/72, C02F 1/78, C02F 3/06, C02F 3/08, C02F 3/12, C02F 101/30

(54) **METHOD AND DEVICE FOR TREATMENT OF WATER USING OZONE**

(30) Priority: 06.02.2020 NL 2024845
(71) Applicant: Nijhuis Water Technology B.V., 7007 CD Doetinchem (NL)
(72) Inventor: van den Eijnde, Tuur Bert Theo, 6532 BL Nijmegen (NL); Wijffels, Thomas Alfons Elisabeth, 7213 BM Gorssel (NL); Menkveld, Hendrik Willem Herman, 7251 SE Vorden (NL)
(74) Representative: Nederlandsch Octrooibureau

(57) **Abstract**

A method and device for removal of micro contaminants from raw water using ozone, wherein ozone and hydrogen peroxide are injected into a conduit, wherein the conduit branches into a first outlet that is connected to a first compartment, and a second outlet that is connected to a second compartment, wherein the second compartment is arranged for receiving water from the first compartment and for preventing flow of water from the second compartment into the first compartment. The method and device provide efficient mixing of ozone and hydrogen peroxide in the water.

## Description

### Field of the invention

The present invention relates to a method and device for treatment of water using ozone to decompose micro-contaminants in the water. Such micro contaminants may have dissolved in the water and may include pesticides, medicine and/or personal care products, and/or may include microorganisms such as bacteria.

### Background art

US 2006/0289362 A1 describes a method for treating water in which a counter current two-stage ozone contact vessel for a large-scale water purification plant is used. Water is provided from a water inlet line to a first stage of the ozone contact vessel, and an electron donating substance and hydrogen peroxide are added to the water before ozone is mixed into the water using an air diffuser plate. During treatment of water using ozone, bromate ions may be formed which are harmful to health. Formation of bromate can be partially reduced by the addition of hydrogen peroxide to the water in the contact vessel, though this may result in a lower effectivity of the ozone for decomposing micro-contaminants in the water. According to the known method, the amount of hydrogen peroxide needed to reduce formation of bromate can be reduced by addition of an electron donating substance to the water, wherein the electron donating substance is selected from the group consisting of saccharides, amino acids, lipids, humic acid, and mixtures thereof. In a second stage of the ozone contact vessel, further amounts of electron donating substance and hydrogen peroxide may be added to the water prior to mixing additional ozone into the water using a further air diffuser plate. The thus treated water leaves the vessel through a water discharge line.

A drawback of the known method is that, in order to efficiently suppress the formation of bromate ions as well as decompose low degradable organic substances that remain, considerable amounts of the electron-donating substances may have to be added to the water and mixed therewith.

It is an object of the present invention to provide a method and device in which this drawback is at least partially overcome.

### Summary of the invention

To this end, according to a first aspect, the present invention provides a water treatment method for removal of micro contaminants from raw water using ozone, comprising: a step of feeding raw water to be treated into an inlet of a conduit; a step of injecting ozone into the water in the conduit; a step of injecting hydrogen peroxide into the water in the conduit; a step of supplying water, into which the ozone has been injected, through a first outlet of the conduit to an inlet of a first ozone reaction compartment while supplying water, into which the ozone and hydrogen peroxide have been injected, through a second outlet of the conduit to an inlet of a second ozone reaction compartment, wherein the first and second compartment are different compartments; letting water flow from the first compartment to the second compartment while preventing water from flowing from the second compartment to the first compartment; the method further comprising: a step of letting water, which has passed through the second compartment, flow, into a bioreactor, such as a Moving Bed Biofilm Reactor (MBBR). The ozone decomposes dissolved organic compounds (DOC) in the water, while the formation of bromate ions is reduced by the addition of the hydrogen peroxide to the water. By injecting the ozone and hydrogen peroxide into the raw water in the conduit, a thorough mixing of the ozone and hydrogen peroxide in the water is ensured before the water stream reaches the second compartment through the second outlet. By using multiple ozone reaction compartments, the average hydraulic retention is increased while reducing the chance that a portion of the water remains in a so-called dead-zones. The compartments for water treatment have a relatively small footprint. Mixing of the ozone and hydrogen peroxide in the water is further improved in the second compartment, as a first stream water flows from the first compartment into the second compartment, and a second stream of water flow from the second outlet of the conduit into the second compartment, the two streams mixing in the second compartment. The directions of the two streams as they enter the second compartment preferably are at an angle of between 90 and 180 degrees to each other. In the bioreactor organic matter that has been decomposed by the ozone upstream from the bioreactor can be further decomposed by bacteria which use oxygen generated as a result of decomposition of the ozone.

In addition to, or instead of hydrogen peroxide, which has an oxidation potential of about 1.78 Volt, oxidizing agents having an oxidation potential of between 1.9 and 1.5 Volt may be used, such as suitable metal oxides or chlorine oxides.

In an embodiment the ozone and hydrogen peroxide are injected into the conduit upstream of the locations where the conduit branches into the first and second outlet. Thus mixing of the ozone with the hydrogen peroxide in water that flows into the first compartment is ensured.

In an alternative embodiment the ozone is injected into the conduit at a location upstream of where the conduit branches into the first and second outlet, and wherein the hydrogen peroxide is injected into the conduit at a location between where the conduit branches into the first and second outlet. The ozone can thus react in the first compartment, without hydrogen peroxide being mixed in in the water in the first compartment.

In an embodiment, the step of letting the water flow into the bioreactor, comprises letting the water pass through a third compartment that is arranged in series between the second compartment and the bioreactor. The third, or a higher number, compartment, which is generally directly connected to the second compartment and to the bioreactor, provides a further increase in the hydraulic retention time of the water during which the ozone can react with micro contaminants in the water.

In an embodiment the bioreactor is an aerobic bioreactor substantially utilizing aerobic bacteria, preferably wherein at least 90% of the oxygen requirement for the aerobic bacteria of the bioreactor is carried by the water that flows into the bioreactor. Thus, the bioreactor can be operated without, or substantially without, adding oxygen from sources other than the compartment to which the bioreactor is directly connected. In particular, the bioreactor can be operated substantially without adding oxygen to the bioreactor other than from decomposition of the injected ozone.

Preferably at least 95% of the oxygen requirement is carried by the water that flows into the bioreactor. For instance, if the bioreactor is directly connected to the second compartment, most or all of the oxygen needed by the bioreactor may be supplied to the bioreactor from the second compartment. Likewise, if the bioreactor is directly connected to the third compartment, most or all of the oxygen needed by the bioreactor may be supplied to the bioreactor from the third compartment.

In an embodiment, at least 90% of the oxygen requirement for the bioreactor has passed through the conduit. For instance, the raw water that is fed into the conduit may have a certain oxygen content, and the amount of oxygen in the raw water is increased by injecting the ozone and hydrogen peroxide into the water which partially decompose into oxygen. The total amount of oxygen that enters the bioreactor, e.g. oxygen in the water and/or oxygen flowing directly from the second or third compartment into the bioreactor at a level above the water surface, may thus be sufficient to completely, or at least for 90%, provide the oxygen requirement for the bacteria in the bioreactor. The bioreactor can thus be constructed without separate ducts or air inlets in the bottom and/or side of the bioreactor at a level below the water surface.

In an embodiment substantially no air is supplied to water in the bioreactor at a location below the water surface. In this embodiment the oxygen required by the bioreactor is substantially completely provided by the water entering the bioreactor from the second or third compartment. The cost of separately oxygenating the water in the bioreactor can thus be completely, or substantially completely, be avoided.

In an embodiment the ozone is injected into the water in the conduit using a Venturi injector, preferably wherein the water is supplied to the inlet of the conduit at a pressure of 1,4 atm or more above ambient atmospheric pressure. By injecting the ozone into the water in this manner, the degree to which the ozone dissolves in the water is increased. The hydrogen peroxide may be injected into the water in the conduit using a separate Venturi injector.

In an embodiment the ozone is injected into the water in the conduit at a concentration of between 0,1 and 5,0 gr ozone per gr of dissolved organic carbon (DOC) in the water. The concentration of DOC in the raw water can be determined using a test, e.g. in accordance with ASTM D7573- 18ae1. Preferably, the system is provided with an inline DOC measuring system, for measuring DOC in the water in the conduit upstream from the hydrogen peroxide and ozone injection points in the conduit. It has been found that due to the enhanced mixing, even a concentration of 0,1 and 0,3 gr ozone per g of dissolved organic compound (DOC) in the raw water may still suffice to effectively treat the water.

In an embodiment the average hydraulic retention time of the water from the time it enters the first compartment to the time it leaves the bioreactor is at least 10 minutes, preferably between 20 minutes and 5 hours.. The average hydraulic retention time in the second compartment will generally be less than the hydraulic retention time in the first compartment, as the combined rate of flow of water from the first compartment and from the second inlet into the second compartment is generally higher than the rate of flow of water from the first inlet into the first compartment.

In an embodiment the hydrogen peroxide is injected into the water in the conduit at a concentration of between 0,5 and 50 mg of hydrogen peroxide / litre of raw water. Generally, the higher the concentration of DOC in the water, the higher the concentration of ozone injected into the water and the higher the concentration of hydrogen peroxide that is injected into the water will be. Preferably, the hydrogen peroxide is injected into the water in the conduit at a concentration of between 2 and 8 mg of hydrogen peroxide / litre of raw water, more preferably at a concentration of between 4 and 6 of hydrogen peroxide / litre of raw water.

In an embodiment, the bioreactor is or comprises one or more of: a sludge on carrier bioreactor; a Moving Bed Biofilm Reactor (MBBR); a packed bed bioreactor; a fibrous bed bioreactor; a membrane bioreactor; - a fixed bed bioreactor; a trickle-bed bioreactor; and/or a biorotor reactor. The invention allows each of these to be arranged downstream of reaction compartments, e.g. to be retrofitted downstream of reaction compartments an existing water treatment device, in without requiring an additional supply of oxygen to the bioreactor.

According to a second aspect, the invention provides a water treatment device for removal of micro contaminants from raw water using ozone, the device comprising: a conduit comprising an inlet for raw water to be treated, a first outlet, and a second outlet; a first ozone reaction compartment comprising an inlet that is connected to the first outlet; a second ozone reaction compartment comprising an inlet that is connected to the second outlet, wherein the second ozone reaction compartment is arranged for receiving water from the first ozone reaction compartment; a bioreactor arranged for receiving water from the second ozone reaction compartment; an ozone injection device connected to the conduit between the inlet and the first outlet; and an a hydrogen peroxide injection device connected to the conduit between the inlet and the second outlet. The device is adapted for injecting ozone and hydrogen peroxide into raw water in the conduit, thus ensuring that the ozone and hydrogen peroxide are thoroughly mixed in the water before the water reaches the second ozone reaction compartment through the second outlet. By letting water flow from the first ozone reaction compartment to the second ozone reaction compartment, as well as from the second outlet to the second compartment, mixing is further improved. The first and second compartment preferably have a substantially same volume for containing water. This allows the compartments to be of a similar construction, facilitating manufacturing of the device. By providing at least two ozone reaction compartments upstream from the bioreactor, it can be ensured that water that enters the bioreactor is substantially free of ozone, at least to an extent that the allows bacteria in the bioreactor to survive.

Water can only flow in a direction from the second compartment, optionally via one or more further compartments, to the bioreactor compartment, but not in the opposite direction. It is thus ensured that water that has been treated by the bioreactor does not come in contact with untreated water.

Though the second ozone reaction compartment is preferably directly downstream from the first ozone reaction compartment, it is possible that a number of further compartments are arranged between the second compartment and the bioreactor, e.g. to increase hydraulic retention time.

In an embodiment the ozone injection device and the hydrogen peroxide injection device are connected to the conduit upstream of the locations where the conduit branches into the first and second outlet. In an alternative embodiment the ozone injection device is connected to the conduit at a location upstream of where the conduit branches into the first and second outlet, and wherein the hydrogen peroxide injection device is connected to the conduit at a location between where the conduit branches into the first and second outlet.

In an embodiment, the second compartment is arranged for receiving water from the first compartment via an overflow weir. This is a particularly simple manner to ensure that water flows from the first compartment to the second compartment but not the other way around. Due to the water in the conduit being at a higher pressure than the water in the first and second compartment, flow of water from these compartment back into the conduit is prevented. One or more of the first, second and optionally third compartment, and/or the bioreactor are preferably provided with a pressure regulation valve, for allowing gas to escape therefrom. When the compartments and the bioreactor are in open fluid connection for passage of gas with each other, only on such pressure regulation valve may suffice.

In an embodiment, one or more of the compartments upstream from the bioreactor are substantially enclosed. For instance, the compartments may be substantially airtight, except for at their inlet(s) and outlet(s) for water, and possibly except for at an optional flue duct provided to allow the ozone to escape in a controlled manner. Generally, all of the compartments that are directly connected to the conduit are substantially enclosed to prevent ozone that is injected together with water into those compartments, from escaping. In some embodiments, some air, including gaseous ozone may pass between two adjacent compartments at the inlet/outlet for water between the two compartments. The bioreactor may be open at an upper side, as the amount of ozone in the bioreactor typically is too small to cause harm to animals or persons in the vicinity of the bioreactor.

In an embodiment, the device further comprises a third compartment connected in series between the second compartment and the bioreactor. The third compartment receives water from the second compartment and increases the amount of time the ozone in the water can react with micro contaminants before the water flows from the third compartment into the bioreactor.

In an embodiment the bioreactor is or comprises one or more of: a sludge on carrier bioreactor; a Moving Bed Biofilm Reactor (MBBR); a packed bed bioreactor; a fibrous bed bioreactor; a membrane bioreactor; a trickle-bed reactor; and/or a biorotor reactor.

In an embodiment the conduit has a cross sectional area, in a direction normal to the longitudinal direction of the conduit, smaller than 1000 cm², preferably smaller than 115 cm². The conduit will generally be formed as a pipe with branches debouching respectively in the first and second compartment. The total volume of the conduit and its branches is at least 10 times smaller, preferably at least 100 times smaller, than the volume of each of the compartments into which the branches of the conduit debouch.

In an embodiment, the device comprises an ozone supply connected to the ozone injection device, and/or a hydrogen peroxide supply connected to the hydrogen peroxide injection device.

In an embodiment the ozone injection device and/or the hydrogen peroxide injector device comprises a Venturi injector. This ensures thorough mixing of the ozone and/or hydrogen into the water in the conduit. Preferably separate devices are used for injecting ozone and hydrogen peroxide into the water in the conduit.

In an embodiment the bioreactor is an aerobic bioreactor substantially utilizing aerobic bacteria.

In an embodiment, the bioreactor comprises a bottom wall and side walls which are adapted for together containing water in the bioreactor, wherein the bottom wall and side walls are free from passages for supply of air below the water level. In case water enters the bioreactor via an overflow weir, then the at a level below the overflow edge of the overflow weir the bioreactor is preferably completely free from passage for supplying air into the water. In such a case, the only passage for water in the bioreactor below the overflow edge may be a passage for allowing water that has been treated to leave the bioreactor.

In an embodiment, wherein the bioreactor is free of air ducts which debouch in the water at a level below the water surface for supplying air into the water... Thus, the bioreactor can remain free from diffuser plates and the like.

In an embodiment the biological filter is provided with an agitator for mechanically agitating the water in the biological filter. The agitator can be used to ensure that the oxygen containing water which enters the bioreactor is distributed more homogeneously over the reactor.

### Short description of drawings

The present invention will be discussed in more detail below, with reference to the attached drawings, in which:
Fig. 1A and 1B respectively show a process diagram and a schematical water treatment device according to a first embodiment of the present invention;
Fig. 2A and 2B respectively show a process diagram and a schematical water treatment device according to a first embodiment of the present invention;
Fig. 3 shows a flow chart illustrating a method according to the present invention.

### Description of drawings

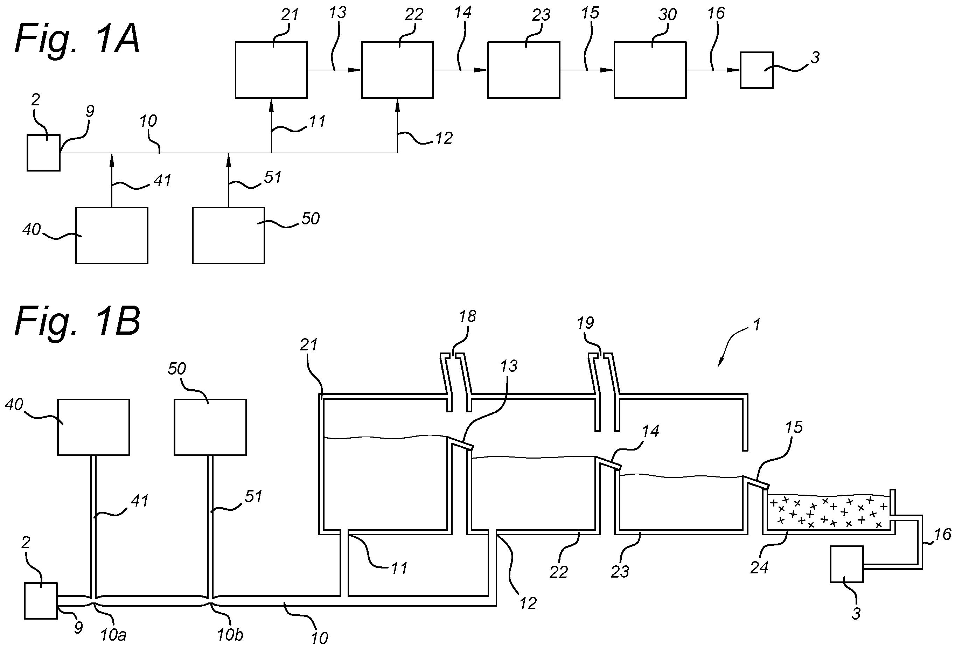

Fig. 1A shows a process diagram for removal of micro contaminants from a raw water stream, from a supply 2 of raw water, e.g. a waste water stream from a hospital which may include micro-contaminants such as antibiotics, blood pressure regulators, analgesics (e.g. Ibuprofen and Diclofenac), antidepressants, pesticides and/or X-ray contrast media, according to a first embodiment of the invention. The raw water stream flows from the supply 2 through a water inlet 9 of a conduit 10. The conduit 10 branches into a first outlet 11 that is connected to an inlet of a first reaction compartment 21, and into a second outlet 12 that is connected to an inlet of a second reaction compartment 22. Before the water reaches either of these compartments 21 ,22, ozone is injected into the water in the conduit 10 via ozone feed line 41 which is connected to an ozone supply 40, and hydrogen peroxide is injected into the water in conduit 10 via hydrogen peroxide feed line 51 which is connected to a hydrogen peroxide supply 50. In this manner the raw water is mixed with ozone and hydrogen peroxide before the water enters the first or second compartment.

The second compartment 22 is located downstream from the first compartment 21 in that it is arranged for receiving water from the first compartment 21 as well, in such a manner that water can flow from the first compartment 21 into the second compartment 22, but not the other way around. Water from the first compartment 21 can thus flow in one direction only, via outlet 13 of the first compartment 21, to a first inlet of a second compartment 22, and a part of the raw water flowing through the conduit 10 can bypass the first compartment and reach the second compartment 22 via second outlet 12.

By injecting the ozone and hydrogen peroxide into the raw water in the conduit 10 it is ensured that the ozone and hydrogen peroxide have mixed in the raw water before the water enters any of the compartments. The first compartment 21 and second compartment 22 may thus be free from separate inlets or air diffusers for adding further chemicals, such as ozone and/or hydrogen peroxide, to the water in the compartments. By connecting both of the compartments 21, 22 to the conduit 10 and by ensuring that all of the water from the first compartment 21 eventually flows into the second compartment 22, mixing of the water with the ozone and hydrogen peroxide is further improved. By using two such reaction compartments 21, 22 instead of a single compartment having the combined volume of those two compartments, the average hydraulic retention time of the water in the compartments is somewhat increased, while formation of "dead zones" is substantially prevented. Some of the ozone in the water that flows from the first compartment 21 to the second compartment 22 will have been consumed by reacting with micro-contaminants in the first compartment, so that the concentration of ozone in water that is supplied from the first compartment to the second compartment will generally be lower than the concentration of ozone in water that is supplied through second outlet 12 to the second compartment.

To further increase the hydraulic retention time, e.g. to increase the amount of time during which ozone in the water can react with the micro-contaminants, an optional a third reaction compartment 23 has been provided which is connected to an outlet 14 of the second compartment 22. The third compartment too may be constructed without separate inlets or air diffusers for adding further chemicals to the water in the compartment. In the example shown, the third compartment 23 has an outlet 15 that is directly connected to an aerobic bioreactor, here in the form of a moving bed biofilm reactor (MBBR) that is arranged downstream of the third compartment.

The water that leaves the third compartment 23 (or leaves the second compartment 22 if the optional third compartment is omitted) flows into the MMBR 30 which comprises a compartment than is partially filled with carriers, e.g. comprising high density-polyethylene having a density between 0.90 and 0.97 g/cm³, that provide a surface on which a biofilm of predominantly aerobic bacteria can grow. MMBRs have been known at least since the 1980s in the prior art and typically are provided with separate aerators in order to supply the oxygen needed for the bacteria to survive and decompose contaminants that may still be present in the water. The cost of aeriation of such conventional MBBRs generally contributes significantly to the total costs of operating a water treatment plant.

The oxygen content needed for the aerobic bacteria to survive in the MBBR and decompose the remaining contaminants is mainly provided by oxygen in the water as a result of decomposition of the ozone and/or hydrogen peroxide that has been injected into the water. Thus, the MBBR can be constructed free from diffuser plates or separate ducts for supplying oxygen into the water in the MBBR. Once water

Each of the first and second compartments 21, 22, optional third compartment 23 and the MBBR 30 may thus be constructed as a compartment, that is free from separate ducts or air diffusers or the like for adding air, ozone, and/or hydrogen peroxide to the water, in particular at a level below the water surface. Though not shown in Fig. 1A, one or more of the reaction compartments 21, 22, 23 and the MBBR 30 may be provided with flue ducts for removal of effluent gases, including ozone, that escape from the water through the water surface. Water that has been treated in the MBBR can leave the MBBR via outlet 16 of the MBBR towards a collector 3 for water that has been treated.

Fig. 1B schematically shows a water treatment device 1 according to the invention, in which like reference numerals refer to like structures as in Fig. 1A and in which flue ducts 18,19 for discharge of ozone are provided respectively between first compartment 21 and second compartment 22, and between second compartment 22 and third compartment 23. The flue ducts are generally provided with a valve which may be closed or opened, depending on the pressure in the compartments 21 and 22.

Water to be treated is fed from a raw water supply 2 to the inlet 9 of conduit 10, and as the water flows from the inlet 9 to either of first conduit 11 or second conduit 12, ozone and hydrogen peroxide are injected into the water at a location upstream of both the first and second conduit 11,12. The ozone, from an ozone supply 40, is led trough a duct 41 to a restricted section in the conduit 10, so that ozone is injected into the water through a Venturi tube formed by the restricted section 10a of the conduit 10. Likewise, hydrogen peroxide from hydrogen peroxide supply 50 is led through duct 51 to be injected into the water in the conduit via a Venturi tube formed by restricted section 10b of the conduit.

The first conduit is connected at a lower portion of the first compartment 21, and in the embodiment of Fig. 1B debouches in a floor portion of the first compartment 21. Second outlet 12 debouches in a floor portion of the second compartment 22. Water flows, via overflow weir 13 of the first compartment 21, from the first compartment into the second compartment, while at the same time water flows from the outlet 12 into the second compartment 22. Whereas the water from the first compartment fall due to gravity into the second compartment, the water from the second outlet 12 is injected into the second compartment at high pressure, so that the tow water streams have opposing directions and mix thoroughly. After having passed the second compartment, water is retained temporarily in the third compartment 23, before flowing into the MBBR. Besides the openings where the outlet 11, 12 debouch in the compartments, the surface of the compartments that lie below the water surface are free from other openings for adding chemical substances, such as air, ozone and/or hydrogen peroxide, to the water in the compartments.

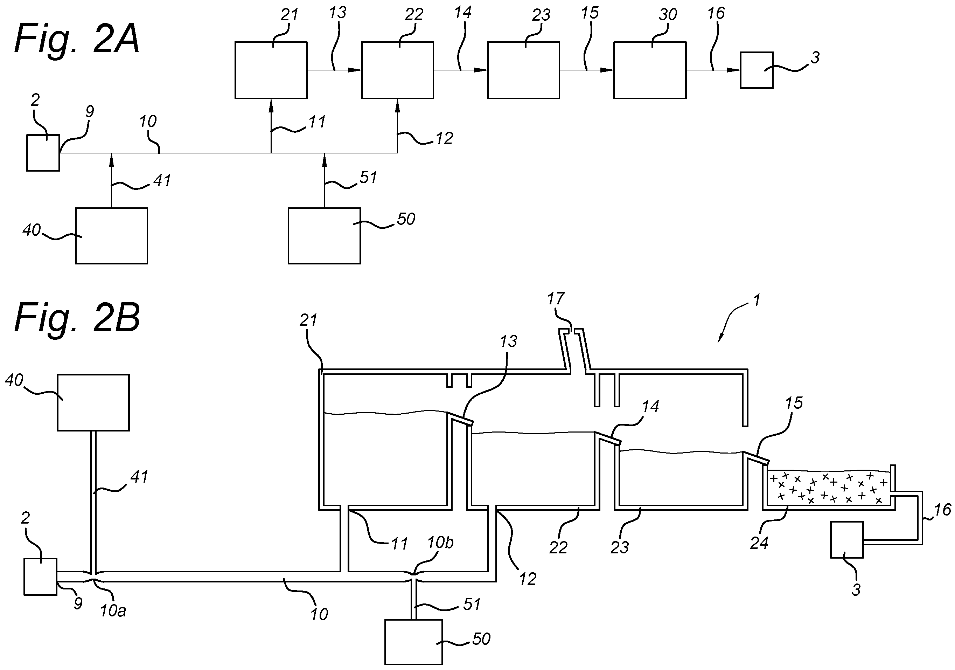

Fig. 2A and 2B respectively shows a process diagram and a schematical view of a water treatment device according to a second embodiment of the invention. In these figures like reference numerals refer to like structures. In the second embodiment, the hydrogen peroxide duct 51 connects to the conduit 10 at a position between the first outlet 11 and the second outlet 12. In this manner, ozone is injected into the water in the conduit that flows into both the first and second compartments, but hydrogenperoxide is only injected into water in the conduit 10 that flows into the second compartment.

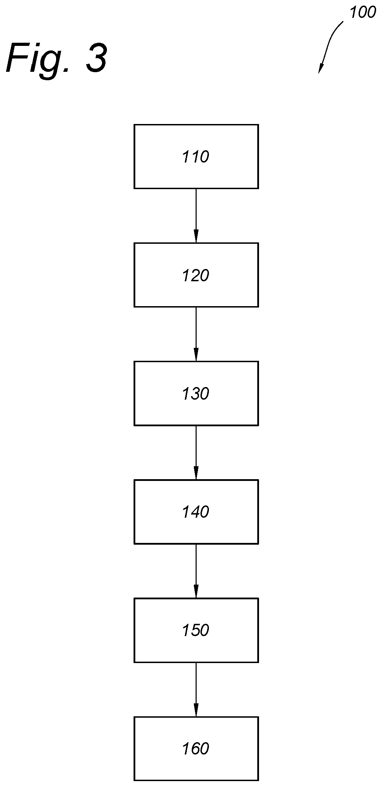

Fig. 3 shows a flowchart of a water treatment method 100 for removing micro contaminants from a raw water stream. In accordance with the method, in step 110 a raw water stream is fed into an inlet to a conduit. In steps 120 and 130 ozone and hydrogen peroxide are injected into the raw water in the conduit via respective inlets. In step 140 some of the water into which ozone has been injected is supplied through a first outlet of the conduit to an inlet of a first ozone reaction compartment, while water into which ozone and hydrogen peroxide have been injected is supplied through a second outlet of the conduit to an inlet of a second ozone reaction compartment. If the hydrogen peroxide has been injected into the conduit upstream of the location where the conduit branches into the first inlet, then hydrogen peroxide will also have been injected into the water that is supplied to the first compartment. Alternatively, if the hydrogen peroxide has been injected into the conduit downstream of the location where the conduit branches into the first inlet, then no hydrogen peroxide will have been injected into the water that is supplied to the first compartment.

In step 150 water from the first compartment flows into the second compartment. There is no flow of water from the second compartment back into the first compartment. Finally, in step 160, the water flows unidirectionally from the second compartment to a bioreactor such as an MBBR.

In summary the invention provides a method and device for removal of micro contaminants from raw water using ozone, wherein ozone and hydrogen peroxide are injected into a conduit, wherein the conduit branches into a first outlet that is connected to a first compartment, and a second outlet that is connected to a second compartment, wherein the second compartment is arranged for receiving water from the first compartment and for preventing flow of water from the second compartment into the first compartment.

The present invention has been described above with reference to a number of exemplary embodiments as shown in the drawings. Modifications and alternative implementations of some parts or elements are possible, and are included in the scope of protection as defined in the appended claims.

## Claims

1. A water treatment method for removal of micro contaminants from raw water using ozone, comprising:
- a step (110) of feeding raw water to be treated into an inlet of a conduit (10);
- a step (120) of injecting ozone into the water in the conduit;
- a step (130) of injecting hydrogen peroxide into the water in the conduit;
- a step (140) of supplying water, into which the ozone has been injected, through a first outlet (11) of the conduit (10) to an inlet of a first ozone reaction compartment (21) while supplying water, into which the ozone and hydrogen peroxide have been injected, through a second outlet (12) of the conduit (10) to an inlet of a second ozone reaction compartment (22), wherein the first and second compartment are different compartments;
letting water flow (150) from the first compartment to the second compartment while preventing water from flowing from the second compartment to the first compartment; the method further comprising:
- a step (160) of letting water, which has passed through the second compartment, flow, into a bioreactor (30).

2. Method according to claim 1, wherein the ozone and hydrogen peroxide are injected into the conduit upstream of the locations where the conduit branches into the first and second outlet.

3. Method according to claim 1, wherein the ozone is injected into the conduit at a location upstream of where the conduit branches into the first and second outlet, and wherein the hydrogen peroxide is injected into the conduit at a location between where the conduit branches into the first and second outlet.

4. Method according to claim 1, 2 or 3, wherein the bioreactor is an aerobic bioreactor substantially utilizing aerobic bacteria.

5. Method according to claim 4, wherein at least 90%, preferably at least 95%, of the oxygen requirement for the aerobic bacteria of the bioreactor is carried by the water that flows into the bioreactor.

6. Method according to any one of the preceding claims, wherein at least 90% of the oxygen requirement for the bioreactor has passed through the conduit.

7. Method according to any one of the preceding claims, wherein substantially no air is supplied to water in the bioreactor at a location below the water surface.

8. Method according to any one of the preceding claims, wherein at least 90% of the oxygen requirement for the bioreactor is provided by decomposition of the injected ozone to oxygen.

9. Method according to any one of the preceding claims, wherein the bioreactor is or comprises one or more of:
a sludge on carrier bioreactor;
a Moving Bed Biofilm Reactor (MBBR);
a packed bed bioreactor;
a fibrous bed bioreactor;
a membrane bioreactor;
- a fixed bed bioreactor;
- a trickle-bed bioreactor; and/or
- a biorotor reactor.

10. Method according to any one of the preceding claims, wherein the ozone is injected into the water in the conduit using a Venturi injector, preferably wherein the water is supplied to the inlet of the conduit at a pressure of 1,4 atm or more above ambient atmospheric pressure.

11. Method according to any one of the preceding claims, wherein the ozone is injected into the water in the conduit at a concentration of between 0,1 and 5,0 gr ozone per gr of dissolved organic carbon (DOC) in the raw water.

12. Method according to any one of the preceding claims, wherein the average hydraulic retention time of the water from the time it enters the first compartment to the time it leaves the bioreactor is at least 10 minutes, preferably between 20 minutes and 5 hours.

13. Method according to any one of the preceding claims, wherein the hydrogen peroxide is injected into the water in the conduit at a concentration of between 0,5 and 50 mg of hydrogen peroxide / litre of raw water, preferably between 2 and 8 mg of hydrogen peroxide / litre of raw water, more preferably between 4 and 6 mg of hydrogen peroxide / litre of raw water.

14. Method according to any one of the preceding claims, further comprising a step of letting the water, which has passed through the second compartment, flow through a third reaction compartment that is arranged in series between the second compartment and the bioreactor.

15. A water treatment device (1) for removal of micro contaminants from raw water using ozone, the device comprising:
a conduit (10) comprising an inlet (1) for raw water to be treated, a first outlet (11), and a second outlet (12);
a first ozone reaction compartment (21) comprising an inlet that is connected to the first outlet;
a second ozone reaction compartment (22) comprising an inlet that is connected to the second outlet, wherein the second ozone reaction compartment is arranged for receiving water from the first ozone reaction compartment;
a bioreactor (30) arranged for receiving water from the second ozone reaction compartment;
an ozone injection device (40) connected to the conduit between the inlet and the first outlet; and
an a hydrogen peroxide injection device (50) connected to the conduit between the inlet and the second outlet.

16. Device according to claim 1, wherein the ozone injection device and the hydrogen peroxide injection device are connected to the conduit upstream of the locations where the conduit branches into the first and second outlet.

17. Device according to claim 1, wherein the ozone injection device is connected to the conduit at a location upstream of where the conduit branches into the first and second outlet, and wherein the hydrogen peroxide injection device is connected to the conduit at a location between where the conduit branches into the first and second outlet.

18. The water treatment device according to any one of claims 15-17, wherein the bioreactor is or comprises one or more of:
- a sludge on carrier bioreactor;
- a Moving Bed Biofilm Reactor (MBBR);
- a packed bed bioreactor;
- a fibrous bed bioreactor;
- a membrane bioreactor;
- a trickle-bed reactor; and/or
- a biorotor reactor.

19. The water treatment device according to any one of claims 15-18, wherein the conduit (10) has a cross sectional area smaller than 115 cm².

20. The water treatment device according to any one of claims 15-19, wherein the second compartment (22) is arranged for receiving water from the first compartment (21) via an overflow weir (13); preferably wherein the bioreactor is arranged for receiving water from the directly upstream compartment (23) via an overflow weir (15).

21. The water treatment device according to any one of claims 15-20, wherein the bioreactor is free of air ducts which debouch into the water at a level below the water surface for suppling air into the water.

22. The water treatment device according to any one of claims 15-21, wherein the biological filter is provided with an agitator for mechanically agitating the water in the biological filter.
